# EUROPÄISCHE PATENTSCHRIFT

(11) **EP 0 828 949 B1**
(45) Veröffentlichungstag und Bekanntmachung des Hinweises auf die Patenterteilung: **24.11.1999**
(21) Anmeldenummer: 96916118.1
(22) Anmeldetag: 17.05.1996
(51) Int. Cl.: F16B 12/42, E04B 2/74, A47B 83/00

(54) **MÖBELSTÜTZE**
FURNITURE SUPPORT
SUPPORT POUR MEUBLE

(30) Priorität: 19.05.1995 DE 29508390 U
(43) Veröffentlichungstag der Anmeldung: 18.03.1998
(73) Patentinhaber: Waibel, Walter, 84130 Dingolfing (DE)
(72) Erfinder: Waibel, Walter, 84130 Dingolfing (DE)
(74) Vertreter: R.A. KUHNEN & P.A. WACKER
(86) Internationale Anmeldenummer: EP9602136
(87) Internationale Veröffentlichungsnummer: WO9636815

(56) Entgegenhaltungen:
- DE-U- 9 416 068
- FR-A- 2 166 532
- US-A- 3 559 352
- US-A- 3 985 083

## Beschreibung

Die Erfindung betrifft eine Möbelstütze, insbesondere für Büro-, Schreib- oder Arbeitsmöbel.

Möbelstützen sind im Möbelbau tragende Elemente, welche beispielsweise als Tischbeine zur Abstützung einer Tischplatte oder als Tragrohre zum Halten und Tragen von Trennwänden, Sichtblenden oder dergleichen dienen. Im Falle von Tragrohren weisen die Möbelstützen, welche in der Regel rohr- oder säulenförmig ausgebildet sind, umfangseitig wenigstens zwei Trägerelemente in Form von angeschweißten oder sonstwie befestigten Laschen auf, an welchen dann die Trennwandelemente mittels Schrauben oder dergleichen befestigbar sind.

Aus der US-A-3 985 083 ist eine gattungsgemäße Möbelstütze bekannt geworden mit einem festen Tragabschnitt in Form wenigstens zweier koaxialer und vertikal verlaufender Rohre, wobei in der Zusammentreffebene der beiden Rohre ein Lagerabschnitt angeordnet ist, wobei am Lagerabschnitt mindestens eine Befestigungseinrichtung für mindestens ein an der Möbelstütze zu lagerndes Möbelteil vorgesehen ist. Je nach Anzahl der an der Möbelstütze anzuschlagenden Möbelteile weist der Lagerabschnitt eine entsprechende Anzahl von Befestigungseinrichtungen auf, wobei zur Verbindung jeder Befestigungseinrichtung mit einer Lagereinrichtung des Möbelteils wenigstens ein Trägerelement vorgesehen ist mit einem Abstützteil zur Verbindung mit der Befestigungseinrichtung. Durch Aufeinanderzuspannen der beiden koaxialen Rohre wird der dazwischenliegende Lagerabschnitt gegenüber dem Tragabschnitt drehfest eingespannt, wonach dann die entsprechenden Möbelteile an den radial vom Umfang der Möbelstütze wegstehenden Befestigungseinrichtungen bzw. Lagereinrichtungen anordenbar sind.

All den weiter oben beschriebenen Möbelstützen und der aus der US-A-3 985 083 bekannten Möbelstütze ist gemeinsam, daß die Trägerelemente umfangseitig festgelegt sind, so daß die bei modernen Möbelsystemen geforderte Flexibilität stark eingeschränkt ist, da an den Möbelstützen zu befestigende Teilelemente des Möbelsystems aufgrund der festen Anordnung der Trägerelemente an den Möbelstützen stets nur in einem bestimmten Winkel zueinander, in der Regel in einem Winkel von 90° oder einem Mehrfachen hiervon zueinander angeordnet werden können. Dem gesamten Möbelsystem wird hierdurch ein starres oder strenges Aussehen verliehen; weiterhin ist die Funktionalität und die Ergonomie eines derartigen Möbelsystems mehr oder weniger stark eingeschränkt.

Die vorliegende Erfindung hat es sich von daher zur Aufgabe gemacht, eine Möbelstütze so auszubilden, daß diese verbesserte Funktionalität hat und somit in ihrem Gebrauchswert erhöht ist.

Die Lösung dieser Aufgabe erfolgt durch die im Anspruch 1 angegebenen Merkmale.

Erfindungsgemäß wird demnach eine Möbelstütze, insbesondere für Büro-, Schreib- oder Arbeitsmöbel geschaffen, mit einem festen, eine Längsachse aufweisenden Tragabschnitt und wenigstens einem hierzu in Richtung einer gemeinsamen Längsachse versetzt angeordneten Lagerabschnitt, wobei am Lagerabschnitt mindestens eine Befestigungseinrichtung für mindestens ein an der Möbelstütze zu lagerndes Möbelteil vorgesehen ist, wobei zur Verbindung jeder Befestigungseinrichtung mit einer Lagereinrichtung des Möbelteils wenigstens ein Trägerelement vorgesehen ist mit einem Abstützteil zur Verbindung mit der Befestigungseinrichtung. Diese bekannte Möbelstütze (US-A-3 985 083) ist erfindungsgemäß dadurch gekennzeichnet, daß der Lagerabschnitt an dem festen Tragabschnitt um dessen Längsachse drehbeweglich angeordnet ist, wobei sowohl am Lagerabschnitt wie auch benachbart hierzu am Tragabschnitt je eine Befestigungseinrichtung für je mindestens ein an der Möbelstütze zu lagerndes Möbelteil vorgesehen ist.

Durch den gegenüber dem ortsfesten Tragabschnitt drehbeweglichen Lagerabschnitt an der erfindungsgemäßen Möbelstütze ist es möglich, das an dem drehbaren Lagerabschnitt angeordnete wenigstens eine Trägerelement gegenüber dem festen Tragabschnitt in einer beliebigen Winkelstellung anzuordnen, so daß ein an dem Trägerelement anzuschlagendes Teilelement des Möbelsystems umfangseitig zur Möbelstütze gesehen bzw. zu wenigstens einem weiteren, an dem drehfesten Tragabschnitt angeschlagenen Teilelement des Möbelsystems gesehen gegenüber der gesamten Möbelstütze eine beliebige Relativlage einnehmen kann.

Hierdurch ist es möglich, beispielsweise zwei einander benachbarte Wandelemente einer Trennwand im beliebigen Winkel zueinander auszurichten. Weiterhin ist es möglich, bei Verwendung der erfindungsgemäßen Möbelstütze als Tischbein an dem Tischbein eine Seitenwange, ein Wandelement oder dergleichen relativ zu dem feststehenden Tisch drehbeweglich anzuordnen. Die erfindungsgemäße Möbelstütze erlaubt somit ein individuelles und weitestgehend ungehindertes Einstellen oder Anpassen eines hiermit ausgerüsteten Möbelsystems auf die jeweils erforderlichen oder gewünschten Arbeitsplatzverhältnisse.

Vorteilhafte Weiterbildungen der Erfindung sind Gegenstand der Unteransprüche.

Das Trägerelement weist bevorzugt ein Halteelement für die Verbindung mit der Lagereinrichtung des Möbelteils auf. Besonders bevorzugt sind hierbei die Trägerelemente rechteckförmige Flachprofile, wobei die Halteelemente in den Trägerelementen als das Flachprofil durchsetzende Bohrungen ausgebildet sind. Ein rasches und problemloses Anschlagen des jeweiligen Möbelteils an der Möbelstütze ist hierdurch gewährleistet.

Das Abstützteil ist bevorzugt mit den möbelstützenseitigen Befestigungseinrichtungen in zwei um 180° gegeneinander verdrehten Positionen in Eingriff bringbar, wobei das Abstützteil gegenüber dem Halteelement bei montiertem Trägerelement einen axialen Abstand aufweist, der dem halben Abstand zwischen den beiden Befestigungseinrichtungen am Tragabschnitt und am Lagerabschnitt entspricht.

Unabhängig davon, ob das Trägerelement am festen Tragabschnitt oder am hierzu drehbeweglichen Lagerabschnitt befestigt ist, wird durch diese vorteilhafte Ausgestaltungsform der Erfindung sichergestellt, daß das trägerelementseitige Halteelement sich stets in der gleichen Höhenlage befindet, so daß auch bei einer Aneinanderkettung mehrerer Möbelteile mit dazwischengeschalteten Möbelstützen, wobei im Zuge der Aneinanderkettung einmal an dem festen Tragabschnitt und einmal an dem drehbaren Lagerabschnitt angeschlagen wird, sich die jeweiligen Möbelteile stets in der gleichen Höhenlage oder in horizontalen Fluchtung befinden.

Der Tragabschnitt besteht bevorzugt aus koaxialen Rohrabschnitten, welche von einem hierzu ebenfalls koaxialen Innenrohr durchsetzt werden, wobei die den Tragabschnitt bildenden Rohrabschnitte drehfest gegenüber dem Innenrohr sind und den wenigstens einen scheibenförmigen und um das Innenrohr drehbeweglichen Lagerabschnitt zwischen sich lagern. Durch diese konstruktive Ausgestaltungsform der erfindungsgemäßen Möbelstütze ist ein optisch gefälliges äußeres Aussehen der Möbelstütze einerseits bei gleichzeitig einfachem aber dennoch konstruktiv sicheren Aufbau andererseits möglich.

Weisen der feste Tragabschnitt und der wenigstens eine drehbewegliche Lagerabschnitt umfangseitig eine Mehrzahl von Befestigungseinrichtungen auf, lassen sich in vorteilhafter Weise mehrere Möbelteile an ein und derselben Möbelstütze anordnen. Hierbei sind die Befestigungseinrichtunger bevorzugt äquidistant, besonders bevorzugt im umfangseitigen Abstand von 90° zueinander angeordnet. Die in mancher Fällen geforderte oder auch nur gewünschte Anordnung vor zwei Möbelteilen im Winkel von 90° zueinander wird hierdurch auf einfache Art und Weise möglich.

Die Befestigungseinrichtungen sind bevorzugt als die Wandungen von Trag- und Lagerabschnitt durchsetzende Gewindebohrungen ausgebildet, wobei die Abstützteile an den Trägerelementen gemäß einer Ausführungsform fest an den Trägerelementen angeordnete Gewindebolzen sind, welche zu den Gewindebohrungen komplementär sind. Ein einfaches und rasches An- und Abmontieren der Trägerelemente - gegebenenfalls auch ohne Werkzeug - ist hierdurch möglich. Gemäß einer anderen Ausführungsform sind die Abstützteile als von den Trägerelementen separate Gewindebolzen ausgebildet, welche eine Aufnahmebohrung in dem Trägerelement durchsetzen und in die die Befestigungseinrichtungen bildenden Gewindebohrungen einschraubbar sind. Auch hiermit ist ein einfaches und rasches An- und Abmontieren der Trägerelemente möglich, wobei sich der zusätzliche Vorteil ergibt, daß zum Anmontieren des Trägerelementes dieses nicht zusammen mit dem hieran fest angeordneten Gewindebolzen gedreht werden muß, um diesen in die jeweilige Gewindebohrung einzudrehen. Speziell bei den letzten Gewindegängen des festen Gewindebolzens besteht nämlich unter Umständen die Möglichkeit, daß das Trägerelement gerade zu der Längsachse der Möbelstütze parallel verläuft, also im wesentlichen vertikal steht, der Eingriff zwischen Gewindebolzen und Gewindebohrung zum endgültigen drehfest-machen des Trägerelementes aber noch eine Drehung des Trägerelelementes um beispielsweise 45° erfordert. Um wieder die gewünschte vertikale Ausrichtung des Trägerelementes zu erhalten, muß dieses somit um mehr als 45° überdreht, oder um mehr als 45° zurückgedreht werden. Im ersteren Fall kann hierbei durch die Kante des Trägerelementes die Oberfläche der Möbelstütze beschädigt werden, da diese Kante beim Uberdrehen gegen diese Oberfläche gedrückt wird und an ihr vorbeischrammt, im letzteren Fall "hängt" das Trägerelement nicht drehfest an der Möbelstütze, so daß nachfolgende Montagearbeiten erschwert sein können. Sind jedoch die Abstützteile als von den Trägerelementen separate Gewindebolzen ausgebildet, welche eine Aufnahmebohrung in dem Trägerelement durchsetzen und in die die Befestigungseinrichtungen bildenden Gewindebohrungen einschraubbar sind, kann stets eine korrekte Lage des Trägerelements einerseits und ein korrekter Gewindeeingriff zwischen Abstützteil und Befestigungseinrichtung andererseits erhalten werden.

Die den Tragabschnitt bildenden Rohrabschnitte können jeweils mittels wenigstens einer Madenschraube in einer der Befestiungseinrichtungen, also in einer der Gewindebohrungen gegenüber dem koaxialen Innenrohr drehfest festgelegt werden. Mit einfachen konstruktiven Mitteln erfolgt hierdurch ein - bei Bedarf auch wieder lösbares - Festlegen des drehfesten Tragabschnittes gegenüber dem Innenrohr.

Hierbei ist weiterhin bevorzugt zumindest im Bereich der Gewindebohrungen zwischen den inneren Umfangswänden der Rohrabschnitte des Tragabschnittes und der äußeren Umfangswand des Innenrohrs jeweils eine Stützmuffe angeordnet, welche jeweils im Preßsitz im Tragabschnitt gehalten ist und von den Gewindebohrungen durchsetzt wird. Durch diese Stützmuffen erfolgt zunächst eine koaxiale Lagefixierung von Innenrohr und Tragabschnitt bzw. dessen Rohrabschnitte zueinander, sowie die Bereitstellung eines längeren Gewindeganges zur Aufnahme entweder des trägerelementseitigen Abstützteiles oder der Madenschraube.

Bevorzugt weist der scheibenförmige, zwischen zwei Rohrabschnitten des Tragabschnittes angeordnete Lagerabschnitt axial obere und untere umlaufende Stützschultern für die Randabschnitte der dem Lagerabschnitt benachbarten beiden Rohrabschnitte des Tragabschnittes auf. Eine saubere Führung des drehbaren Lagerabschnittes gegenüber den drehfesten Rohrabschnitten des Tragabschnittes ist hierdurch gewährleistet.

Sind die Trägerelemente rechteckförmige Flachprofile, wobei die Halteelemente dieses Flachprofil durchsetzende Bohrungen sind, sind die Trägerelemente zum Anschlag einer Vielzahl von unterschiedlich ausgestalteten Möbelteilen geeignet, wobei das Anschlagen aufgrund der Bohrung einfach und schnell, beispielsweise mit einem Gewindebolzen oder dergleichen erfolgen kann.

Weist das Flachprofil der Trägerelemente an seiner der Möbelstütze zugewandten Schmalseite einen zurückspringenden Wandabschnitt auf, welcher nicht das feste Abstützteil bzw. die Aufnahmebohrung für das separate Abstützteil aufweist, so wird durch die Anlage des Trägerelementes an der Möbelstütze die Drehbarkeit des Lagerabschnittes nicht gehemmt, da eine flächige Anlage des Trägerelementes entweder am Tragabschnitt aufgrund des zurückspringenden Wandabschnittes keine zusätzliche Anlage am Lagerabschnitt bedingt und umgekehrt, der Lagerabschnitt also in seiner Drehbeweglichkeit nicht gehemmt wird.

Weitere Einzelheiten, Aspekte und Vorteile der vorliegenden Erfindung ergeben sich aus der nachfolgenden Beschreibung unter Bezugnahme auf die Zeichnung.

Es zeigt:
Fig. 1 einen Vertikalschnitt durch eine erfindungsgemäße Möbelstütze;
Fig. 2 eine perspektivische Ansicht einer ersten Ausführungsform eines an der Möbelstütze anzuordnenden Trägerelementes;
Fig. 3 eine perspektivische Ansicht einer zweiten Ausführungsform eines an der Möbelstütze anzuordnenden Trägerelementes; und
Fig. 4A bis 4C schematisch vereinfachte Draufsichten auf die erfindungsgemäße Möbelstütze mit unterschiedlichen Anbringmöglichkeiten von Möbelteilen hieran.

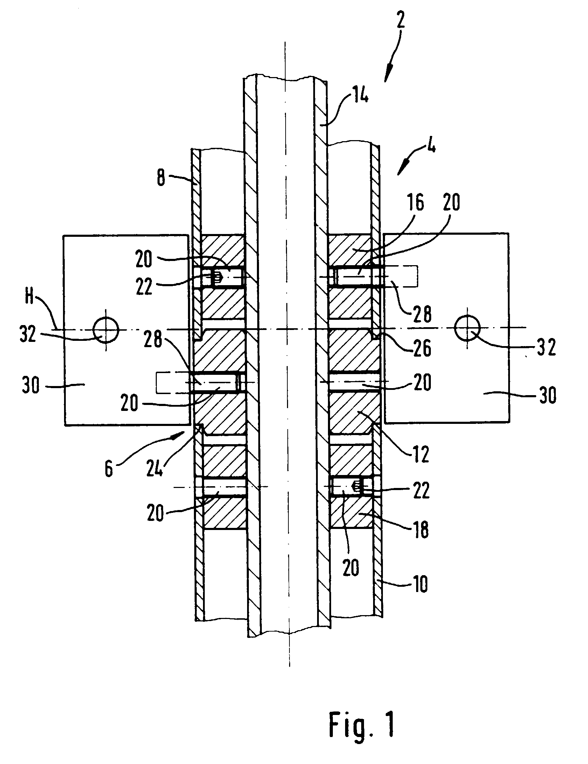

Eine in Fig. 1 insgesamt mit 2 bezeichnete erfindungsgemäße Möbelstütze umfaßt gemäß Fig. 1 einen ortsfesten Tragabschnitt 4 und wenigstens einen hierzu um eine Längsachse drehbeweglich geführten Lagerabschnitt 6. Der Tragabschnitt ist hierbei gemäß Fig. 1 aus koaxialen Rohrabschnitten 8 und 10 gebildet, welche den als Scheibe 12 ausgebildeten Lagerabschnitt 6 zwischen sich einfassen. In der Regel sind für gewöhnlich zwei Lagerabschnitte 6 an einer Möbelstütze 2 vorgesehen, nämlich im Bereich des oberen und unteren Endes der Möbelstütze 2. Die gesamte Möbelstütze 2 besteht demnach aus den beiden scheibenförmigen Lagerabschnitten 6 und insgesamt drei den Rohrabschnitten 8 und 10 entsprechenden Rohrabschnitten des festen Tragabschnittes 4.

Das obere freie Ende der Möbelstütze 2 kann mit einer in Fig. 1 nicht dargestellten Abdeckkappe verschlossen sein und das untere Ende der Möbelstütze kann eine ebenfalls nicht sichtbare Justiereinrichtung aufweisen, mit der Bodenunebenheiten ausgleichbar sind, so daß beispielsweise ein Tisch horizontal und wackelfrei aufgestellt werden kann.

Zur Lagefixierung des Tragabschnittes 4 und des Lagerabschnittes 6 verläuft koaxial zu diesen Abschnitten durch die Möbelstütze 2 ein Innenrohr 14. Das Innenrohr 14 durchsetzt hierbei Stützmuffen 16 und 18 im Tragabschnitt 4 bzw. den den Tragabschnitt bildenden Rohrabschnitten 8 und 10. Weiterhin durchsetzt das Innenrohr 14 die Scheibe 12, welche den Lagerabschnitt 6 bildet.

Die Stützmuffen 16 und 18 sind in die Rohrabschnitte 8 und 10 des Tragabschnittes 4 unmittelbar benachbart des Lagerabschnittes 6 bzw. der den Lagerabschnitt 6 bildenden Scheibe 12 eingepreßt. Weiterhin weisen sowohl die Wandungen der Rohrabschnitte 8 und 10 und die zugeordneten Stützmuffen 16 und 18, als auch die Scheibe 12 des Lagerabschnittes 6 umfangseitig angeordnete Befestigungseinrichtungen in Form von Bohrungen 20 auf. Die Bohrungen 20 sind bevorzugt äquidistant entlang des Um) fanges der Rohrabschnitte 8 und 10 und der Scheibe 12, besonders bevorzugt im Abstand von jeweils 90° zueinander angeordnet; ein jeder Rohrabschnitt 8 und 10 und auch die Scheibe 12 weist somit bevorzugt jeweils vier Bohrungen 20 auf. Selbstverständlich ist die Anzahl der Bohrungen nicht auf vier beschränkt; eine, zwei oder sechs oder noch mehr Bohrungen sind ebenfalls möglich.

Die Bohrungen 20 durchsetzen sowohl die Wandungen der Rohrabschnitte 8 und 10, als auch das Material der dahinter liegenden Stützmuffen 16 und 18, sind also zu dem Innenrohr 14 hin offen. Auch die Bohrungen 20 in der Scheibe 12 des Lagerabschnittes 6 durchsetzen diese Scheibe vollständig, öffnen sich also zu dem Innenrohr 14 hin. Wie in Fig. 1 ersichtlich, können in die Bohrungen 20 der Rohrabschnitte 8 und 10 jeweils mindestens eine Inbus- oder Madenschraube 22 so weit eingeschraubt werden, daß das in Einschraubrichtung vorne liegende Ende der Schraube 22 gegen die Außenwand des Innenrohres 14 drückt. Hierdurch werden die Rohrabschnitte 8 und 10 des Tragabschnittes 4 gegenüber dem Innenrohr 14 drehfest festgelegt.

Die zwischen den aufeinander zu weisenden Öffnungen oder Mündungen der Rohrabschnitte 8 und 10 liegende Scheibe 12 des Lagerabschnittes 6 kann eine obere und eine untere umfangseitig umlaufende Schulter 24 bzw. 26 aufweisen. Die aufeinander zu weisenden Öffnungen oder Ränder der Rohrabschnitte 8 und 10 sitzen an diesen Schultern 24 und 26 auf und aufgrund der axialen und auch umfangseitigen Lagefixierung der Rohrabschnitte 8 und 10 aufgrund der Schrauben 22 in den zugeordneten Bohrungen 20 ist somit die Scheibe 12 durch das Aufsitzen der Rohröffnungen der Rohrabschnitte 8 und 10 an den Schultern 24 und 26 und umfangseitig aufgrund des durchlaufenden Innenrohrs 14 in Axialrichtung unbeweglich, umfangseitig jedoch drehbeweglich gegenüber den Rohrabschnitten 8 und 10 geführt.

Befindet sich in der Möbelstütze 2 noch ein weiterer Lagerabschnitt 6 oder noch weitere Lagerabschnitte 6, entsprechen Aufbau bzw. Anordnung der dortigen Bereiche der Möbelstütze 2 demjenigen bzw. derjenigen von Fig. 1.

Die Bohrungen 20 am Tragabschnitt 4 und am Lagerabschnitt 6 dienen weiterhin zur Aufnahme von Abstützteilen, welche an Trägerelementen angeordnet sind.

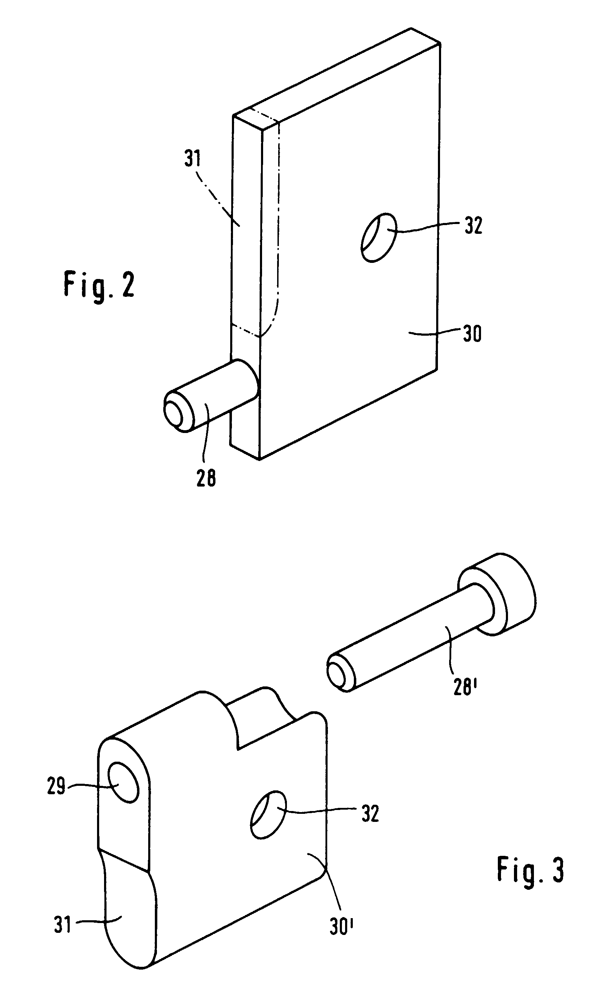

Gemäß Fig. 2 sind die Trägerelemente 30 in einer ersten Ausführungsform im wesentlichen rechteckförmige Flachprofile, wobei die Abstützteile 28 Gewindestifte sind, welche in entsprechenden Gewindebohrungen an den Trägerelementen 30 fest eingeschraubt sind und hiervon vorstehen. Die Abstützteile 28 sind für einen Eingriff mit den Bohrungen 20 ausgelegt.

Jedes Trägerelement weist weiterhin ein Halteelement 32 auf, wobei das Halteelement 32 für die Verbindung mit einer entsprechend komplementär ausgebildeten Lagereinrichtung an einem Möbelteil vorgesehen ist. Im in Fig. 1 und 2 dargestellten einfachsten Ausführungsbeispiel ist das Halteelement 32 in Form einer Bohrung ausgelegt, so daß das Möbelteil bzw. die dem Möbelteil zugeordnete Lagereinrichtung durch eine Schraub- oder Steckverbindung mit dem Trägerelement 30 und damit der Möbelstütze 2 verbindbar ist.

In einer zweiten Ausführungsform sind gemäß Fig. 3 die Abstützteile 28' als von den Trägerelementen 30' separate Gewindebolzen ausgebildet, welche eine Aufnahmebohrung 29 in dem Trägerelement 30' durchsetzen und in die die Befestigungseinrichtungen 20 bildenden Gewindebohrungen am Tragabschnitt 4 oder am Lagerabschnitt 6 einschraubbar sind. Gegenüber der ersten Ausführungsform des Trägerelementes 30 von Fig. 2 ergibt sich hierbei - neben einer gleichermaßen guten und einfachen An- und Demontierbarkeit - der zusätzliche Vorteil, daß zum Anmontieren des Trägerelementes 30' dieses nicht zusammen mit dem hieran fest angeordneten Gewindebolzen (Bezugszeichen 28; Fig. 2) gedreht werden muß, um diesen in die jeweilige Gewindebohrung oder Befestigungseinrichtung 20 einzudrehen. Speziell bei den letzten Gewindegängen des festen Gewindebolzens besteht nämlich unter Umständen die Möglichkeit, daß das Trägerelement gerade zu der Längsachse der Möbelstütze parallel verläuft, also im wesentlichen vertikal steht, der Eingriff zwischen Gewindebolzen und Gewindebohrung zum endgültigen drehfest-machen des Trägerelementes jedoch noch eine Drehung des Trägerelelementes um beispielsweise 45° erfordert. Um wieder die gewünschte vertikale Ausrichtung des Trägerelementes zu erhalten, muß dieses somit um mehr als 45° überdreht, oder um mehr als 45° zurückgedreht werden. Im ersteren Fall kann hierbei durch die in Drehrichtung des Trägerelementes vorne liegende Kante des Trägerelementes die Oberfläche der Möbelstütze im Bereich von Trag- und/oder Lagerabschnitt beschädigt werden, da diese Kante beim Überdrehen gegen diese Oberfläche gedrückt wird und an ihr vorbeischrammt, im letzteren Fall "hängt" das Trägerelement nicht drehfest an der Möbelstütze, so daß nachfolgende Montagearbeiten erschwert sein können. Sind jedoch gemäß Fig. 3 die Abstützteile 28' als von den Trägerelementen 30' separate Gewindebolzen ausgebildet, welche die Aufnahmebohrung 29 in dem Trägerelement 30' durchsetzen und in die die Befestigungseinrichtungen 20 bildenden Gewindebohrungen am Trag- oder Lagerabschnitt einschraubbar sind, kann stets eine korrekte Lage des Trägerelementes 30' einerseits und ein korrekter Gewindeeingriff zwischen Abstützteil 28' und Befestigungseinrichtung 20 andererseits erhalten werden. Auch das Trägerelement 30' weist gemäß Fig. 3 das Halteelement 32 auf, welches im einfachsten Falle eine Durchgangsbohrung ist.

Wie weiterhin aus Fig. 3 hervorgeht, weist das Flachprofil des Trägerelementes 30' an seiner der Möbelstütze bzw. dem dortigen Trag- oder Lagerabschnitt zugewandten Schmalseite einen zurückspringenden Wandabschnitt 31 auf, welcher nicht die Aufnahmebohrung 29 für das separate Abstützteil 28' aufweist. Ein derartiger zurückspringender Wandabschnitt kann auch bei der Ausgestaltungsform gemäß Fig. 2 vorhanden sein; in diesem Fall weist der zurückspringende Wandabschnitt 31 nicht das feste Abstützteil 28 auf, würde also in Fig. 2 oberhalb des Abstützteiles 28 liegen, wie dort strichpunktiert angedeutet. In beiden Fällen wird durch die Anlage des Trägerelementes 30 oder 30' an der Möbelstütze die Drehbarkeit des dortigen Lagerabschnittes 6 bzw. die Drehbarkeit der Scheibe 12 nicht gehemmt, da eine flächige Anlage des Trägerelementes 30 oder 30' am Tragabschnitt 4 aufgrund des zurückspringenden Wandabschnittes 31 keine zusätzliche Anlage am Lagerabschnitt 6 bedingt und umgekehrt, die Scheibe 12 des Lagerabschnittes 6 also in ihrer Drehbeweglichkeit nicht gehemmt wird.

Wie insbesondere aus Fig. 1 hervorgeht, ist jedes Trägerelement 30 (30') wahlweise entweder mit seinem Abstützteil 28 (28') mit einer Bohrung 20 am Tragabschnitt 4 oder mit einer Bohrung 20 am Lagerabschnitt 6 verbindbar. In Fig. 1 ist veranschaulicht, wie das dortige linke Trägerelement 30 (30') mit seinem Abstützteil 28 (28') mit der Bohrung 20 in der den Lagerabschnitt 6 bildenden Scheibe in Eingriff ist und wie das rechte Trägerelement 30 (30') mit seinem Abstützteil 28 (28') mit der Bohrung 20 in dem oberen Rohrabschnitt 8 bzw. der zugehörigen Stützmuffe 16 in Eingriff ist.

Wie weiterhin aus Fig. 1 hervorgeht, ist das Abstützteil 28 (28') gegenüber dem Halteelement 32 in einem axialen Abstand angeordnet, der dem halben Abstand zwischen den beiden Bohrungen 20 am Tragabschnitt 4 und am Lagerabschnitt 6 entspricht. Unabhängig davon, ob das Trägerelement 30 (30') somit am Tragabschnitt 4 oder nach Drehung um 180° am Lagerabschnitt 6 eingeschraubt ist, liegen hierdurch die Halteelemente 32 - im dargestellten Ausführungsbeispiel die Bohrungen in den Trägerelementen 30 (30') - stets auf dem gleichen Höhenniveau H, so daß auch bei einer Verkettung mehrerer Möbelteile untereinander unter Verwendung mehrerer Möbelstützen 2 die einzelnen Möbelteile stets in der gleichen Höhenlage ausgerichtet sind. Speziell bei Trennwänden oder dergleichen ist dies schon alleine aus ästhetisch/optischen Gründen, aber auch aus Gründen der Funktionalität von wesentlicher Bedeutung.

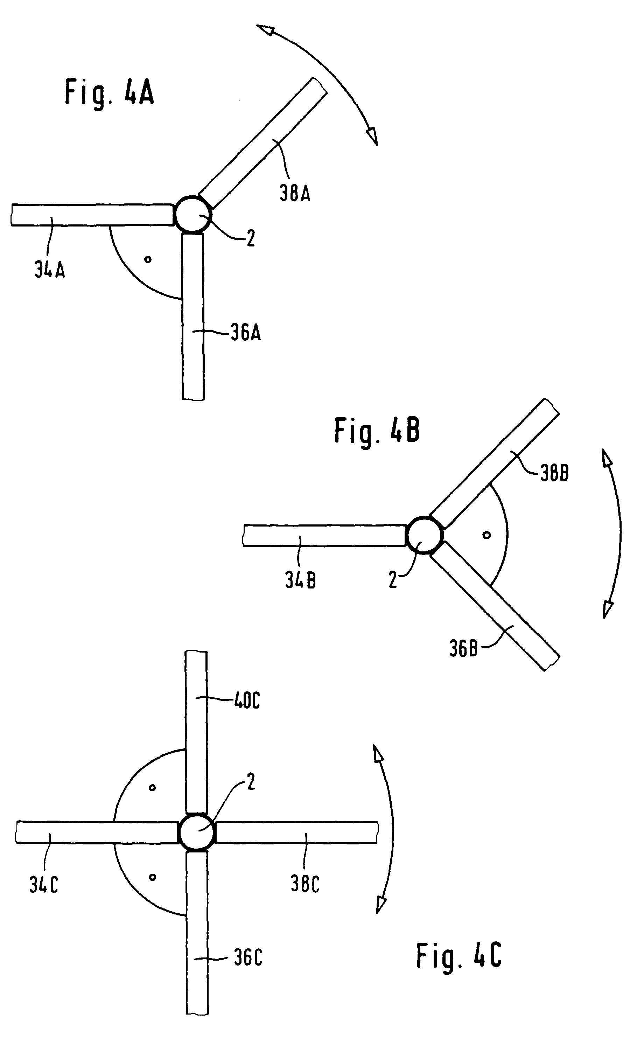

Die Figuren 4A bis 4C zeigen Beispiele, wie die erfindungsgemäße Möbelstütze 2 in der Praxis eingesetzt werden kann. Es versteht sich, daß die in den Figuren 4A bis 4C dargestellten Einsatzmöglichkeiten als rein exemplarisch und illustrativ, nicht jedoch als einschränkend zu verstehen sind.

Bei der Anwendungsmöglichkeit gemäß Fig. 4A dient die Möbelstütze 2 zum Lagern oder Anschlagen von insgesamt drei Möbelteilen 34A, 36A und 38A. Die Möbelteile 34A und 36A sind hierbei über entsprechende Trägerelemente 30 (30') an dem drehfesten Tragabschnitt 4 angeschlagen und stehen somit relativ zueinander fest in einem Winkel von 90°. Beispielsweise bildet das Möbelteil 34A die Rückwand und das Möbelteil 36A die Seitenwange eines Schreibtisches, wobei dann die Möbelstütze 2 das in Draufsicht gesehen rechte hintere Standbein eines Schreibtischgestelles wäre. Das Möbelteil 38A ist demgegenüber an der Scheibe 12 des Lagerabschnittes 6 angeschlagen, wie es in Fig. 1 auf der linken Seite dargestellt ist, d.h. das dem Möbelteil 38A zugeordnete Trägerelement 30 (30') ist mit seinem als Abstützteil 28 (28') dienenden Gewindestift in die Bohrung 20 der Scheibe 12 eingeschraubt. Hierdurch ist - wie in Fig. 4A durch den Doppelpfeil veranschaulicht - das Möbelteil 38A gegenüber der Möbelstütze 2 in einem Bereich von annähernd 270° schwenkbar. Das Möbelteil 38A kann beispielsweise eine Trennwand oder dergleichen sein, welche somit gegenüber der Möbelstütze 2 beliebig verstellbar ist.

Es versteht sich, daß an dem in Fig. 4A nicht dargestellten, der Möbel stütze 2 abgewandten Ende des Möbelteils 38A eine weitere Möbelstütze 2 gemäß der vorliegenden Erfindung angeordnet ist oder angeordnet sein kann, welche dann zum Anbringen eines weiteren Möbelteils - gegebenenfalls ebenfalls mit Schwenkmöglichkeit - vorgesehen ist.

Fig. 4B zeigt den Anwendungsfall, wo das Möbelteil 34B fest an der Möbelstütze 2 angeschlagen ist, also das dem Möbelteil 34B zugeordnete Trägerelement 30 (30') an dem Tragabschnitt 4 eingeschraubt ist. Zwei weitere Möbelteile 36B und 38B sind im Winkel von 90° zueinander an der Scheibe 12 des Lagerabschnittes 6 angeschlagen und können somit gemeinsam um einen maximalen Winkelbetrag von 270° um die Möbelstütze 2 herum geschwenkt werden, wobei jedoch ihre Relativlage von 90° zueinander aufrechterhalten bleibt.

Fig. 4C zeigt, wie drei Möbelteile 34C, 36C und 40C an dem festen Tragabschnitt 4 im Abstand von jeweils 90° zueinander angeschlagen sind, und ein viertes Möbelteil 38C an dem beweglichen Lagerabschnitt 6 angeschlagen ist, so daß es gegenüber der Möbelstütze 2 in einem Winkelbereich von maximal 180° verschwenkbar ist.

Das Innenrohr 14 kann an dem oberen freien Ende ein Innen- oder Außengewinde aufweisen zur Aufnahme eines entsprechenden Außen- oder Innengewindes einer Kappe, mit der dann die Möbelstütze 2 von oben her abdeckbar ist. Das Innenrohr 14 kann weiterhin an seinem unteren freien Ende ebenfalls ein Innen- oder Außengewinde aufweisen zur Aufnahme eines entsprechenden Außen- oder Innengewindes eines Abstützteiles, mit dem dann die Möbelstütze 2 auf dem Boden aufsitzt. Aufgrund der Schraubverbindung zu dem Innenrohr 14 kann dieses Teil dann gegenüber dem Innerohr 14 und damit gegenüber der Möbelstütze 2 ein- oder ausgeschraubt werden, um eine Höhenverstellung der Möbelstütze 2 in einem gewissen Bereich zum Ausgleich von Bodenunebenheiten zu ermöglichen.

Durch Lösen der Schrauben 22 in den Bohrungen 20 des Tragabschnittes 4 kann die gesamte Anordnung der einzelnen Rohrabschnitte problemlos auseinandergezogen werden und es können beispielsweise das Innenrohr 14 durch ein längeres Innenrohr und die Rohrabschnitte 8 und 10 des Tragabschnittes 4 durch längere Rohrabschnitte ersetzt werden, falls eine Aufrüstung in die Höhe gewünscht oder erforderlich ist.

Falls die umlaufenden Schultern 24 und 26 an der Scheibe 12 entsprechend tief ausgebildet werden, kann gegebenenfalls auf ein durchgehendes Innenrohr 14 verzichtet werden; das Innenrohr 14 wäre also in einzelne Rohrabschnitte unterteilt, welche jeweils die Bohrung der Scheiben 12 durchlaufen und im Bereich der Stützmuffen 16 oder 18 der Rohrabschnitte 8 oder 10 enden und dort über die Schrauben 22 festgelegt sind.

Es ist auch möglich, mehrere Innenrohre miteinander zu verschrauben, so daß daraus ein längeres Innenrohr entsteht, bevorzugt in einem Rastermaß. Hierzu weisen die Innenrohre bevorzugt oben ein Innengewinde und unten einen hierzu passenden Gewindebolzen auf.

Neben einer hohen Funktionalität besitzt die erfindungsgemäße Möbelstütze 2 auch noch ein ästhetisch sehr ansprechendes Äußeres, insbesondere dann, wenn für das Material oder die Oberflächenbeschaffenheit der Scheibe 12 ein anderer Farbton und/oder eine andere Oberflächenbeschaffenheit verwendet wird. Beispielsweise können die Rohrabschnitte 8 und 10 des Tragabschnittes 4 aus verchromten Metall sein, wohingegen die Scheibe 12 des Lagerabschnittes 6 aus einem andersfarbigen Metall, beispielsweise Messing oder aus einem entsprechend eingefärbten Kunstoff ist.

Die Rohrabschnitte 8 und 10 und die Scheibe 12 haben bevorzugt runden Querschnitt; es sind jeoch auch hiervon abweichende Querschnitte, insbesondere polygone Querschnitte möglich.

## Patentansprüche

1. Möbelstütze, insbesondere für Büro-, Schreib- oder Arbeitsmöbel, mit einem festen, eine Längsachse aufweisenden Tragabschnitt (4) und wenigstens einem hierzu in Richtung einer gemeinsamen Längsachse versetzt angeordneten Lagerabschnitt (6), wobei am Lagerabschnitt (6) mindestens eine Befestigungseinrichtung (20) für mindestens ein an der Möbelstütze (2) zu lagerndes Möbelteil (34, 36, 38, 40) vorgesehen ist, wobei zur Verbindung jeder Befestigungseinrichtung (20) mit einer Lagereinrichtung des Möbelteils (34, 36, 38, 40) wenigstens ein Trägerelement (30; 30') vorgesehen ist mit einem Abstützteil (28; 28') zur Verbindung mit der Befestigungseinrichtung (20),
dadurch gekennzeichnet, daß
der Lagerabschnitt (6) an dem festen Tragabschnitt (4) um dessen Längsachse drehbeweglich angeordnet ist, wobei sowohl am Lagerabschnitt (6) wie auch benachbart hierzu am Tragabschnitt (4) je eine Befestigungseinrichtung (20) für je mindestens ein an der Möbelstütze (2) zu lagerndes Möbelteil (34, 36, 38, 40) vorgesehen ist.

2. Möbelstütze nach Anspruch 1, dadurch gekennzeichnet, daß das Trägerelement (30; 30') ein Halteelement (32) für die Verbindung mit der Lagereinrichtung des Möbelteils (34, 36, 38, 40) aufweist.

3. Möbelstütze nach Anspruch 2, dadurch gekennzeichnet, daß das Abstützteil (28; 28') mit den Befestigungseinrichtungen (20) in zwei um 180° gegeneinander verdrehten Positionen in Eingriff bringbar ist, wobei das Abstützteil (28; 28') gegenüber dem Halteelement (32) bei montiertem Trägerelement (30; 30') einen axialen Abstand aufweist, der dem halben Abstand zwischen den beiden Befestigungseinrichtungen (20) am Tragabschnitt (4) und am Lagerabschnitt (6) entspricht.

4. Möbelstütze nach einem der vorhergehenden Ansprüche, dadurch gekennzeichnet, daß der Tragabschnitt (4) aus koaxialen Rohrabschnitten (8, 10) besteht, welche von einem hierzu ebenfalls koaxialen Innenrohr (14) durchsetzt werden, wobei die den Tragabschnitt (4) bildenden Rohrabschnitte (8, 10) drehfest gegenüber dem Innenrohr (14) sind und den wenigstens einen scheibenförmigen und um das Innenrohr (14) drehbeweglich geführten Lagerabschnitt (6) zwischen sich lagern.

5. Möbelstütze nach einem der vorhergehenden Ansprüche, dadurch gekennzeichnet, daß der feste Tragabschnitt (4) und der wenigstens eine drehbewegliche Lagerabschnitt (6) umfangsseitig eine Mehrzahl von Befestigungseinrichtungen (20) aufweisen, welche bevorzugt äquidistant, besonders bevorzugt im umfangsseitigen Abstand von 90° zueinander sind.

6. Möbelstütze nach einem der vorhergehenden Ansprüche, dadurch gekennzeichnet, daß die Befestigungseinrichtungen (20) als die Wandungen von Trag- und Lagerabschnitt (4, 6) durchsetzende Gewindebohrungen ausgebildet sind.

7. Möbelstütze nach einem der Ansprüche 4 bis 6, dadurch gekennzeichnet, daß die den Tragabschnitt (4) bildenden Rohrabschnitte (8, 10) jeweils mittels wenigstens einer Madenschraube (22) in einer der vorhandenen Befestigungseinrichtungen (20) gegenüber dem koaxialen Innenrohr (14) drehfest festlegbar sind.

8. Möbelstütze nach Anspruch 6 oder 7, dadurch gekennzeichnet, daß zumindest im Bereich der Gewindebohrungen zwischen den inneren Umfangswänden der Rohrabschnitte (8, 10) des Tragabschnittes (4) und der äußeren Umfangswand des Innenrohrs (14) jeweils eine Stützmuffe (16, 18) angeordnet ist, welche im PreBsitz im Tragabschnitt (4) gehalten ist und von den Gewindebohrungen durchsetzt wird.

9. Möbelstütze nach einem der Ansprüche 6 bis 8, dadurch gekennzeichnet, daß die Abstützteile (28) fest an den Trägerelementen (30) angeordnete Gewindebolzen sind, welche zu den die Befestigungseinrichtungen (20) bildenden Gewindebohrungen komplementär sind.

10. Möbelstütze nach einem der Ansprüche 6 bis 8, dadurch gekennzeichnet, daß die Abstützteile (28') als von den Trägerelementen (30') separate Gewindebolzen ausgebildet sind, welche eine Aufnahmebohrung (29) in dem Trägerelement durchsetzen und in die die Befestigungseinrichtungen (20) bildenden Gewindebohrungen einschraubbar sind.

11. Möbelstütze nach einem der Ansprüche 4 bis 10, dadurch gekennzeichnet, daß der scheibenförmige Lagerabschnitt (6) zwischen den zwei Rohrabschnitten (8, 10) des Tragabschnittes (4) axial obere und untere, umlaufende Stützschultern (24, 26) für die Randbereiche der dem Lagerabschnitt (6) benachbarten beiden Rohrabschnitte (8, 10) des Tragabschnittes (4) aufweist.

12. Möbelstütze nach einem der vorhergehenden Ansprüche, dadurch gekennzeichnet, daß die Trägerelemente (30; 30') rechteckförmige Flachprofile sind und daß die Halteelemente (32) in den Trägerelementen (30; 30') das Flachprofil durchsetzende Bohrungen sind.

13. Möbelstütze nach Anspruch 12, dadurch gekennzeichnet, daß das Flachprofil der Trägerelemente (30; 30') an seiner der Möbelstütze zugewandten Schmalseite einen zurückspringenden Wandabschnitt (31) aufweist, welcher nicht das feste Abstützteil (28) bzw. die Aufnahmebohrung (29) für das separate Abstützteil (28') aufweist.

## Claims

1. A furniture support, more particularly for office, desk or work furniture, comprising a fixed bearer section (4) having a longitudinal axis and at least one mounting section (6) which is offset therefrom in the direction of a common longitudinal axis, the mounting section (6) being provided with at least one fixing means (20) for at least one furniture part (34, 36, 38, 40) to be mounted on the furniture support, at least one bearer element (30; 30') being provided to connect each fixing means (20) to a mounting means of the furniture part (34, 36, 38, 40), with a bracer part (28; 28') for connecting to the fixing means (20), characterised in that the mounting section (6) is disposed on the fixed bearer section (4) so as to be rotationally movable about the longitudinal axis of the bearer section, a fixing means (20) being provided both on the mounting section (6) and also adjacent the same on the bearer section (4), the fixing means (20) each being intended for at least one furniture part (34, 36, 38, 40) to be mounted on the furniture support (2).

2. A furniture support according to claim 1, characterised in that the bearer element (30; 30') comprises a retaining element (32) for connection to the mounting means of the furniture part (34, 36, 38, 40).

3. A furniture support according to claim 2, characterised in that the bracer part (28, 28') is adapted to be brought into engagement with the fixing means (20) in two positions offset 180° from one another, the bracer part (28; 28') having, relative to the retaining element (32) when the bearer element (30; 30') is fitted, an axial distance corresponding to half the distance between the two fixing means (20) on the bearer section (4) and on the mounting section (6).

4. A furniture support according to any one of the preceding claims, characterised in that the bearer section (4) consists of coaxial tube sections (8, 10) through which extends an inner tube (14) which is likewise coaxial thereto, the tube sections (8, 10) which form the bearer section (4) being non-rotatable relative to the inner tube (14) and mounting between them the at least one disc-shaped mounting section (6) guided for rotational movement about the inner tube (14).

5. A furniture support according to any one of the preceding claims, characterised in that the fixed bearer section (4) and the at least one rotationally movable mounting sections (6) peripherally comprise a plurality of fixing means (20) which are preferably equidistant from one another, particularly preferably at peripheral intervals of 90°.

6. A furniture support according to any one of the preceding claims, characterised in that the fixing means (20) are in the form of screwthreaded bores extending through the walls of the bearer section and the mounting section (4, 6).

7. A furniture support according to any one of claims 4 to 6, characterised in that the tube sections (8, 10) forming the bearer section (4) are each fixable so as to be non-rotatable relative to the coaxial inner tube (14) in each case by means of at least one grub screw (22) in one of the fixing means (20) provided.

8. A furniture support according to claim 6 or 7, characterised in that at least in the range of the screwthreaded bores between the inner peripheral walls of the tube sections (8, 10) of the bearer section (4) and the outer peripheral wall of the inner tube (14) there is provided in each case a support sleeve (16, 18) which is held in the bearer section (4) in a forced fit and is traversed by the screwthreaded bores.

9. A furniture support according to any one of claims 6 to 8, characterised in that the bracer parts (28) are screwthreaded bolts disposed rigidly on the bearer elements (30) and complementary to the screwthreaded bores forming the fixing means (20).

10. A furniture support according to any one of claims 6 to 8, characterised in that the bracer parts (28') are in the form of screwthreaded bolts separate from the bearer elements (30') and extending through a receiving bore (29) in the bearer element and adapted to be screwed into the screwthreaded bores forming the fixing means (20).

11. A furniture support according to any one of claims 4 to 10, characterised in that the disc-shaped mounting section (6) between the two tube sections (8, 10) of the bearer section (4) comprises axially top and bottom peripheral support shoulders (24, 26) for the edge zones of the two tube sections (8, 10) of the bearer section (4) adjacent the mounting section (6).

12. A furniture support according to any one of the preceding claims, characterised in that the bearer elements (30; 30') are rectangular flat profiles and in that the retaining elements (32) in the bearer elements (30; 30') are bores extending through the flat profile.

13. A furniture support according to claim 12, characterised in that the flat profile of the bearer elements (30; 30') at its narrow side facing the furniture support has a receding wall section (31) which does not have the fixed bracer part (28) or the receiving bore (29) for the separate bracer part (28').

## Revendications

1. Support pour meuble, en particulier pour bureaux, meubles de bureau ou meubles de travail, avec une portion support (4) fixe présentant un axe longitudinal, et au moins une portion de positionnement (6) décalée par rapport à cette dernière dans la direction d'un axe longitudinal commun, au moins un agencement de fixation (20) pour au moins un élément de meuble (34, 36, 38, 40) à positionner sur le support pour meuble (2) étant prévu sur ladite portion de positionnement (6), au moins un élément support (30 ; 30') étant prévu pour le raccordement de chaque agencement de fixation (20) avec un agencement de positionnement de l'élément de meuble (34, 36, 38, 40), ledit élément support étant doté d'un élément d'appui (28 ; 28') pour son raccordement à l'agencement de fixation (20),
caractérisé en ce que
la portion de positionnement (6) est agencée sur la portion support fixe (4) avec capacité de rotation autour de l'axe longitudinal de cette dernière, un agencement de fixation (20) pour au moins un élément de meuble (34, 36, 38, 40) à positionner sur le support pour meuble (2) étant prévu tant sur la portion de positionnement (6) que sur la portion support (4), à proximité de ladite portion de positionnement.

2. Support pour meuble selon la revendication 1, caractérisé en ce que l'élément support (30 ; 30') présente un élément de maintien (32) pour son raccordement avec l'agencement de positionnement de l'élément de meuble (34, 36, 38, 40).

3. Support pour meuble selon la revendication 2, caractérisé en ce que l'élément d'appui (28 ; 28') peut être mis en prise avec les agencements de fixation (20) selon deux positions décalées l'une de l'autre de 180°, l'élément d'appui (28 ; 28') se trouvant, lorsque l'élément support (30 ; 30') est monté, à une distance axiale de l'élément de maintien (32), qui correspond à la moitié de la distance séparant les deux agencements de fixation (20) que présentent respectivement la portion support (4) et la portion de positionnement (6).

4. Support pour meuble selon l'une des revendications précédentes, caractérisé en ce que la portion support (4) se compose de portions de tube (8, 10) coaxiales, traversées par un tube interne (14) qui leur est également coaxial, les portions de tube (8, 10) formant la portion support (4) étant montées fixes en rotation par rapport au tube interne (14) et enserrant entre elles la ou les portions de positionnement (6) en forme de disque, guidés avec capacité de rotation autour du tube interne (14).

5. Support pour meuble selon l'une des revendications précédentes, caractérisé en ce que la portion support fixe (4) et la ou les portions de positionnement (6) mobiles en rotation présentent sur leur périphérie une pluralité d'agencements de fixation (20) disposés de préférence à équidistance les uns des autres, de manière particulièrement préférentielle, en définissant entre eux, sur la périphérie, un angle de 90°.

6. Support pour meuble selon l'une des revendications précédentes, caractérisé en ce que l'agencement de fixation (20) se présente sous la forme d'alésages taraudés traversant les parois de la portion support (4) et de la portion de positionnement (6).

7. Support pour meuble selon l'une des revendications 4 à 6, caractérisé en ce que les portions de tube (8, 10) formant la portion support (4) peuvent être rendues solidaires en rotation du tube interne coaxial (14) au moyen d'au moins une vis sans tête (22) engagée dans l'un des agencements de fixation (20) présents.

8. Support pour meuble selon la revendication 6 ou 7, caractérisé en ce qu'un manchon (16, 18) est agencé au moins au niveau des alésages taraudés, entre les parois périphériques internes des portions de tube (8, 10) de la portion support (4) et la paroi périphérique externe du tube interne (14), ledit manchon d'appui, étant maintenu par ajustage serré dans la portion support (4) et étant traversé par les alésages taraudés.

9. Support pour meuble selon l'une des revendications 6 à 8, caractérisé en ce que les éléments d'appui (28) consistent en des tiges filetées agencées fixement sur les éléments supports (30) et complémentaires des alésages taraudés formant les agencements de fixation (20).

10. Support pour meuble selon l'une des revendications 6 à 8, caractérisé en ce que les éléments d'appui (28') se présentent sous la forme de tiges filetées indépendantes des éléments supports (30'), lesdites tiges filetées traversant un perçage de positionnement (29) que présente l'élément support et pouvant être vissées dans les alésages taraudés formant les agencements de fixation (20).

11. Support pour meuble selon l'une des revendications 4 à 10, caractérisé en ce que la portion de positionnement (6) en forme de disque, entre les deux portions de tube (8, 10) de la portion support (4), présente des épaulements d'appui périphériques (24, 26) supérieur et inférieur, dans la direction axiale, destinés à recevoir les régions terminales des deux portions de tube (8, 10) de la portion support (4), qui sont adjacentes à la portion de positionnement (6).

12. Support pour meuble selon l'une des revendications précédentes, caractérisé en ce que les éléments support (30 ; 30') consistent en des profilés plats de forme rectangulaire et en ce que les éléments de maintien (32) que présentent les éléments supports (30 ; 30') consistent en des alésages traversant ledit profilé plat.

13. Support pour meuble selon la revendication 12, caractérisé en ce que le profilé plat des éléments supports (30 ; 30') présente, sur son côté étroit en regard du support pour meuble, une portion de paroi en décrochement (31) qui ne présente pas l'élément d'appui fixe (28) ou le perçage de positionnement (29) destiné à recevoir l'élément d'appui indépendant (28').
